# EUROPÄISCHE PATENTSCHRIFT

(11) **EP 2 285 609 B1**
(45) Veröffentlichungstag und Bekanntmachung des Hinweises auf die Patenterteilung: **02.01.2013**
(21) Anmeldenummer: 08784268.8
(22) Anmeldetag: 25.06.2008
(51) Int. Cl.: B60J 7/057

(54) **CABRIOLET-FAHRZEUG MIT EINEM VERDECK**
CABRIOLET VEHICLE WITH A TOP
VEHICULE CABRIOLET AVEC CAPOTE

(30) Priorität: 28.07.2007 DE 102070035538
(43) Veröffentlichungstag der Anmeldung: 23.02.2011
(73) Patentinhaber: Wilhelm Karmann GmbH, 49084 Osnabrück (DE)
(72) Erfinder: JAHN, Jorg, 32257 Bünde (DE); GUTENDORF, Peter, 49088 Osnabrück (DE)
(74) Vertreter: Kronthaler, Schmidt & Coll.
(86) Internationale Anmeldenummer: PCT/DE2008/001071
(87) Internationale Veröffentlichungsnummer: WO 2009/015622

(56) Entgegenhaltungen:
- EP-A- 1 780 084
- DE-A1- 10 248 762
- US-A- 5 300 905

## Beschreibung

Die Erfindung betrifft ein Cabriolet-Fahrzeug mit einem Verdeck, welches zwischen einer einen Fahrgastraum freigebenden Position und einer den Fahrgastraum schließenden Position verfahrbar ist, nach der im Oberbegriff des Patentanspruches 1 näher definierten Art.

Bei Cabriolet-Fahrzeugen mit einem automatisiert fahrbaren Verdeck ist es aus der Praxis bekannt, zur Vermeidung eines Einklemmens von Körperteilen oder Gegenständen eine Detektionseinrichtung zur Überwachung des Bewegungsraumes des Verdecks vorzusehen.

Da derartige Detektionseinrichtungen mit einem allgemeinen Ausfallrisiko behaftet sind, ist es üblich, dass eine Bedienperson einen zur automatischen Überführung des Verdecks zwischen einer geschlossenen Position und einer offenen Position vorgesehenen Taster während der gesamten Verdeckbewegung betätigen muss. Somit kann die Bedienperson bei einer drohenden Einklemmsituation reagieren, indem sie den Taster loslässt und den Verdeckantrieb hierdurch stoppt.

In der DE 102 48 762 B4 wird ein Cabriolet-Fahrzeug offenbart, welches ein verfahrbares Verdeck und eine Detektionseinrichtung zur Erkennung eines Eingriffs in einen Bewegungsraum eines Verdeckmechanismus aufweist, wobei die Detektionseinrichtung nach unterschiedlichen Messprinzipien arbeitende Sensoren aufweist, so dass bei einem Ausfall einer nach einem bestimmten Messprinzip arbeitenden Sensorik eine Einklemmsituation durch eine nach einer anderen Messmethode arbeitende Sensorik sichergestellt ist.

Wenngleich eine derartige Detektionseinrichtung eine erhöhte Sicherheit bietet, kann diese nicht oder nur mit einem unverhältnismäßig hohen sensorischen und rechnerischen Aufwand das Erkennen einer kritischen Situation durch einen Menschen ersetzen.

Eine den menschlichen Verstand involvierende Überwachung mit einer permanenten Tasterbetätigung durch die Bedienperson während der Verdeckbewegung widerspricht jedoch dem wachsenden Komfortbedürfnis.

So wäre es wünschenswert, eine automatische Verdeckbewegung mit nur einer einzigen, kurzzeitigen Betätigung eines Tasters einleiten zu können und dabei einen ausreichenden Einklemmschutz gewährleisten zu können.

Es ist somit Aufgabe der vorliegenden Erfindung, ein Cabriolet-Fahrzeug mit einem Verdeck der eingangs genannten Art zu schaffen, bei welchem eine verbesserte Anpassbarkeit der Verdeckbewegung an die Betriebssituation, insbesondere im Hinblick auf eine Erhöhung eines Einklemmschutzes bei gleichzeitiger Komforterhöhung für den Fahrer realisiert ist.

Diese Aufgabe wird mit einem Cabriolet-Fahrzeug gelöst, welches mit einem Verdeck gemäß den Merkmalen des Patentanspruches 1 ausgestattet ist.

Es ist somit ein Cabriolet-Fahrzeug mit einem Verdeck vorgesehen, welches zwischen einer einen Fahrgastraum freigebenden Position und einer den Fahrgastraum schließenden Position verfahrbar ist, wobei erfindungsgemäß vorgeschlagen wird, dass eine Verdeckbewegung nach einer Betätigung eines ersten Bedienelements durch einen Bediener automatisiert ausführbar ist und mittels wenigstens eines wenigstens während der automatischen Verdeckbewegung einer Not-Stopp-Einrichtung des Verdecks zugeordneten zweiten Bedienelements von dem Bediener deaktivierbar ist, wobei das wenigstens eine zweite Bedienelement nur während einer Aktivierung der automatischen Verdeckbewegung der Not-Stopp-Einrichtung zugeordnet ist und ohne Aktivierung der automatischen Verdeckbewegung einer weiteren Funktionseinrichtung zugeordnet ist.

Ein erfindungsgemäßes Cabriolet-Fahrzeug hat den Vorteil, dass ein Bediener komfortabel mit nur einer kurzzeitigen Betätigung des ersten Bedienelements eine Verdeckbewegung, insbesondere ein vollständiges Öffnen oder Schließen des Verdecks, einleiten kann, wodurch der Bediener nach der kurzen Betätigung des ersten Bedienelements seine volle Konzentration auf andere Bereiche, wie insbesondere den Straßenverkehr, richten kann.

Um eine automatische Verdeckbewegung beispielsweise in einer Gefahrensituation unterbinden zu können, ist es vorgesehen, dass die automatische Verdeckbewegung mittels eines zweiten von dem Bediener während einer automatischen Verdeckbewegung möglichst immer und einfach erreichbaren Bedienelements von dem Bediener deaktivierbar ist.

Mit dem von dem Bediener während einer automatischen Verdeckbewegung betätigbaren zweiten Bedienelement wird die Sicherheit während einer automatischen Verdeckbewegung erhöht, da ein Bediener die automatische Verdeckbewegung bei subjektiver Wahrnehmung einer Gefährdungssituation auch im Falle einer ggf. vorhandenen und die Gefährdungssituation nicht erkennenden Detektionseinrichtung durch eine Betätigung der Not-Stopp-Einrichtung stoppen kann.

Da das zweite Bedienelement nur während einer Aktivierung der automatischen Verdeckbewegung der Not-Stopp-Einrichtung zugeordnet ist und ohne Aktivierung der automatischen Verdeckbewegung einer weiteren Funktionseinrichtung zugeordnet ist, ist eine Platz sparende Ausbildung des zweiten Bedienelements geschaffen. Diese Umwidmung eines außerhalb eines Verdeckbetriebsmodus einer anderen Funktion dienenden Bedienelementes erlaubt es vorteilhafterweise, mehrere "zweite Bedienelemente" der Not-Stopp-Einrichtung an unterschiedlichen Stellen im Fahrzeug vorzusehen, ohne hierfür eigene Schalter, Taster oder dergleichen bereitstellen zu müssen.

Eine einfache Aktivierung der automatischen Verdeckbewegung kann dadurch realisiert werden, dass das erste Bedienelement als ein Schalter ausgebildet ist. Der Schalter kann dabei beispielsweise analog zu herkömmlich bekannten Fensterheberschaltern in der Form ausgebildet werden, dass der Schalter in zwei Richtungen als Schub- oder Kippschalter bewegbar ist, wobei eine Bewegung in eine Richtung zum Öffnen des Verdecks und eine Bewegung in die andere Richtung zum Schließen des Verdecks vorgesehen ist. Eine automatische Verdeckbewegung kann dabei durch ein festes Drücken des Schalters aktiviert werden, nachdem eine erste Stufe des Schalters, welche eine Verdeckbewegung nur solange ausführt, wie der Schalter in der ersten Stufe gedrückt ist, überwunden wird und eine zweite Stufe erreicht wird. In einer alternativen Ausbildung des Schalters weist dieser eine Doppelklickfunktion auf.

Neben dieser Art der Umsetzung des ersten Bedienelements sind selbstverständlich weitere Möglichkeiten wie insbesondere der Einsatz von Berührungssensoren denkbar.

In einer vorteilhaften Ausbildung eines erfindungsgemäßen Cabriolet-Fahrzeugs kann es auch vorgesehen sein, dass das erste Bedienelement neben einer Anordnung im Cabriolet-Fahrzeug, vorzugsweise im Bereich einer Mittelkonsole, zusätzlich an einer Fernbedienung ausgebildet ist, so dass eine Verdeckbewegung auch von einem sich nicht in dem Cabriolet-Fahrzeug befindlichen Bediener ausgelöst werden kann und das Verdeck beispielsweise bei einsetzendem Regen schneller geschlossen werden kann.

Das zweite Bedienelement kann in einfacher und Platz sparender Weise in das erste Bedienelement integriert sein.

Alternativ hierzu kann das zweite Bedienelement separat von dem ersten Bedienelement vorgesehen sein. Hierbei kann das zweite Bedienelement variabel in dem Cabriolet-Fahrzeug angeordnet werden und durch eine funktionale Mehrbelegung an bereits vorhandenen Bedienelementen realisiert werden.

Damit ein Bediener eine automatische Verdeckbewegung möglichst einfach und schnell unterbrechen kann, ist es vorteilhaft, wenn das einfach oder mehrfach vorgesehene zweite Bedienelement an für den Bediener einfach zu erreichenden Stellen, wie beispielsweise an einem Lenkrad insbesondere in Reichweite eines linken Daumens des Bedieners, angeordnet ist oder mit einem Fensterheber, einem Bremspedal, einem Warnblinkerschalter, eine Hupe und/oder einem Motorstart-Taster des Cabriolet-Fahrzeugs verbunden oder hiermit integral ausgebildet ist. In einer weiteren Ausbildung der Erfindung mit einem funkgesteuerten Fahrzeugschlüssel kann das zweite Bedienelement auch in diesen integriert sein.

Insbesondere vorteilhaft ist eine Funktionsintegration der Unterbrechungsfunktionalität in mehrere der genannten Elemente gleichzeitig, da dies dem Bediener mehrere Möglichkeiten der Unterbrechung der automatischen Verdeckbewegung bietet und er das in der jeweiligen Situation am schnellsten zu erreichende zweite Bedienelement nutzen kann.

Das zweite Bedienelement kann vielerlei Formen haben und muss dabei nicht ein haptisch zu bedienendes Element in Form eines Tasters, Schalters oder Sensors darstellen. Beispielsweise ist es auch denkbar, dass das zweite Bedienelement ein vorzugsweise mit einer Spracherkennung verknüpfter akustischer Empfänger ist. Wenn die automatischen Verdeckbewegung mittels einer Sprachbedienung der Not-Stopp-Einrichtung durch kurze und prägnante Ausrufe wie beispielsweise "Stopp" deaktivierbar ist, kann die automatische Verdeckbewegung vorteilhafterweise schnell auch ohne die Benutzung von Händen deaktiviert werden.

Um ein schnelles Auffinden eines manuell zu aktivierenden zweiten Bedienelementes zu erleichtern, ist es in einer Weiterentwicklung der Erfindung vorgesehen, dass das zweite Bedienelement oder gegebenenfalls mehrere zweite Bedienelemente insbesondere während einer automatischen Verdeckbewegung farblich und/oder durch eine geeignete Symbolik gegenüber umliegenden Elementen hervorgehoben derart ausgebildet sind, dass diese auch untertags leicht von dem Bediener erkannt werden können.

Nicht nur zur Verbesserung der Erkennbarkeit des zweiten Bedienelements, sondern auch zur Lenkung der Aufmerksamkeit der Fahrzeuginsassen auf eine mögliche Gefahrensituation ist es vorteilhaft, wenn das zweite Bedienelement zur Ausgabe optischer Signale wie Leuchten oder Blinken und/oder akustischer Signale, insbesondere bei einer Verdeckbewegung und/oder einer von einer Detektionseinrichtung erkannten Einklemmsituation, ausgebildet ist.

Weiterhin kann es auch vorgesehen sein, dass eine automatisierte Verdeckbewegung nach einem Not-Stopp durch eine erste Betätigung des zweiten Bedienelementes, einem automatischen Stopp nach Erkennen einer Einklemmsituation durch eine Detektionseinrichtung oder nach Ausgabe eines Warnsignals durch Betätigung des zweiten Bedienelementes weiter aktivierbar ist. Es kann dann eine von der Bedienperson trotz Warnung oder vorübergehendem Stopp gewünschte Verdeckbewegung nach Bestätigung einer positiven Kenntnisnahme durch die Bedienperson mittels Betätigung des zweiten Bedienelementes durchgeführt werden.

Bei einer vorteilhaften Ausbildung eines erfindungsgemäßen Cabriolet-Fahrzeugs kann es vorgesehen sein, dass eine insbesondere automatische Verdeckbewegung nur bei Detektion einer Fahrzeugsitzbelegung, insbesondere einer Fahrersitzbelegung, auslösbar ist und automatisch unterbrochen wird, wenn der Bediener den entsprechenden Fahrzeugsitz verlässt. Hierdurch kann vorteilhafterweise sichergestellt werden, dass eine unbeaufsichtigte automatische Verdeckbewegung unterbrochen wird, wenn sich ein Bediener bei stehendem Cabriolet-Fahrzeug und aktivierter Zündung nach einer Aktivierung eines Verdeckautomatiklaufs von dem Cabriolet-Fahrzeug entfernt.

Zur Erkennung einer Fahrzeugsitzbelegung sind aus der Praxis vielfältige Möglichkeiten bekannt, so dass die für den jeweiligen Anwendungsfall geeignete Methode ausgewählt werden kann. Die Fahrersitzbelegung kann dabei beispielsweise durch eine Abfrage eines Fahrersitzbelegungssensors im Fahrzeugsitz und/oder einer optischen Überwachung und/oder einen Zustand eines Gurtschlosses und/oder einen Zustand einer Fahrzeugtür und/oder einer Fahrzeuggeschwindigkeit ermittelt werden.

Wenn eine Fahrzeugsitzbelegung durch eine Überwachung einer vorzugsweise linken Hand des Bedieners auf einer festgelegten Position an dem Lenkrad ermittelbar ist, kann zudem sichergestellt werden, dass der Bediener bei Anordnung des zweiten Bedienelements im Bereich der linken Hand des Bedieners die automatische Verdeckbewegung bei Bedarf sehr schnell unterbrechen kann.

In einer vorteilhaften Ausbildung der Erfindung ist es vorgesehen, dass bei einer Auslösung einer automatischen Verdeckbewegung durch das erste Bedienelement insbesondere feststellbar ist, auf welchem Fahrzeugsitz sich ein Bediener befindet, wobei die Auslösung der Verdeckbewegung abhängig von der Position des Bedieners ermöglichbar oder unterbindbar ist. Hierdurch kann beispielsweise vorgesehen werden, dass ausschließlich ein sich auf einem Fahrersitz befindlicher Bediener die automatische Verdeckbewegung auslösen kann.

Wenn eine Signaleinrichtung mit wenigstens einem Signalgeber vorgesehen ist, wobei der Signalgeber vor und/oder während einer insbesondere automatischen Verdeckbewegung ein Warnsignal erzeugt, können Fahrzeuginsassen und sich eventuell in der näheren Umgebung befindliche Personen auf die kommende bzw. gerade ausgeführte Verdeckbewegung hingewiesen werden und für die möglichen Gefahren sensibilisiert werden.

Der wenigstens eine Signalgeber kann hierbei als akustischer Signalgeber ausgebildet sein, welcher beispielsweise als ein bereits im Cabriolet-Fahrzeug vorhandener Signalgeber, wie ein Warnsummer, und/oder als separater Signalgeber ausgebildet sein kann, mittels welchem z. B. auch eine insbesondere kurze und prägnante Stimmausgabe zur Warnung wiedergegeben werden kann.

Weiterhin kann der wenigstens eine Signalgeber auch als optischer Signalgeber ausgebildet sein, wobei hierfür insbesondere eine Cabriolet-Innenbeleuchtung und/oder eine Cabriolet-Außenbeleuchtung und/oder eine Beleuchtung von Bedienelementen und/oder eine Anzeige in einem Kombiinstrument und/oder eine Lackierung von Verdeckteilen insbesondere in Signalfarben vorgesehen werden können und beispielsweise neben einem akustischen Signalgeber auf die Gefahr während einer automatischen Verdeckbewegung aufmerksam machen können.

In einer vorteilhaften Ausbildung der Erfindung kann es auch vorgesehen sein, dass die Funktionalität der automatischen Verdeckbewegung beispielsweise vom Händler sperrbar ist und vom Bediener erst nach seiner Bestätigung, dass er beispielsweise ein Handbuch gelesen und sich mit der Funktionalität beschäftigt hat, freigeschaltet werden kann.

Weitere Vorteile und vorteilhafte Ausführungen eines Cabriolet-Fahrzeugs mit einem Verdeck nach der Erfindung ergeben sich aus den Patentansprüchen, der Zeichnung und der Beschreibung.

Nachfolgend ist ein erfindungsgemäßes Cabriolet-Fahrzeug mit einem Verdeck anhand der Zeichnung prinzipmäßig beschrieben.

Es zeigt:
- Fig. 1: eine vereinfachte dreidimensionale Ansicht eines Cabriolet-Fahrzeugs mit einem in einer geöffneten Position dargestellten Verdeck; und
- Fig. 2: eine vereinfachte dreidimensionale Ansicht des Verdecks der Fig. 1 in Alleinstellung, wobei das Verdeck in einer geschlossenen Position dargestellt ist.

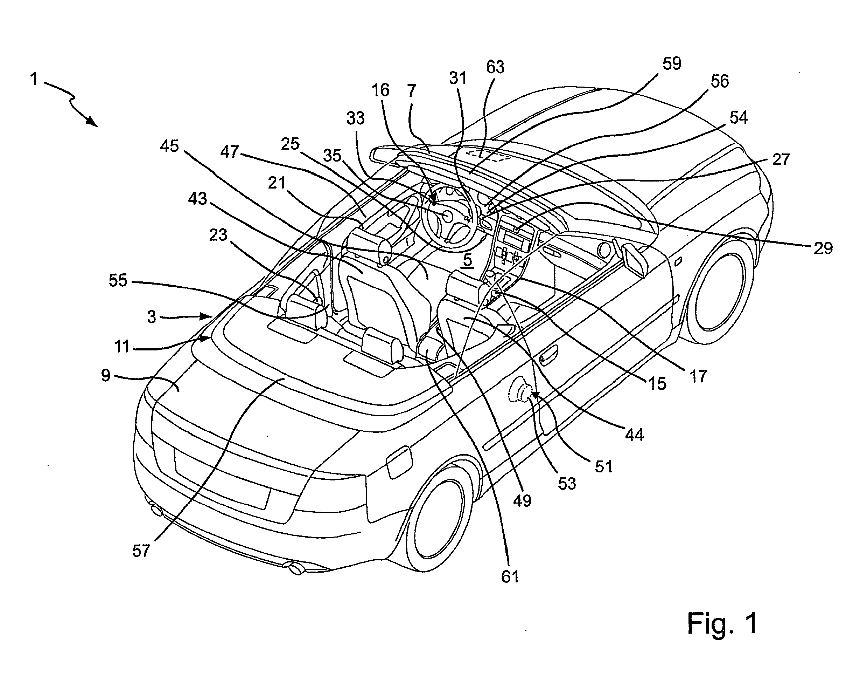

In Fig. 1 ist ein Cabriolet-Fahrzeug 1 mit einem Verdeck 3 dargestellt, wobei das Verdeck 3 zwischen einem geöffneten, einen Fahrgastraum 5 freigebenden Zustand und einem geschlossenen, den Fahrgastraum 5 schließenden Zustand, in welchem sich das Verdeck 3 von einem Windschutzscheibenrahmen 7 bis zu einem Heckdeckel 9 erstreckt, verfahrbar ist.

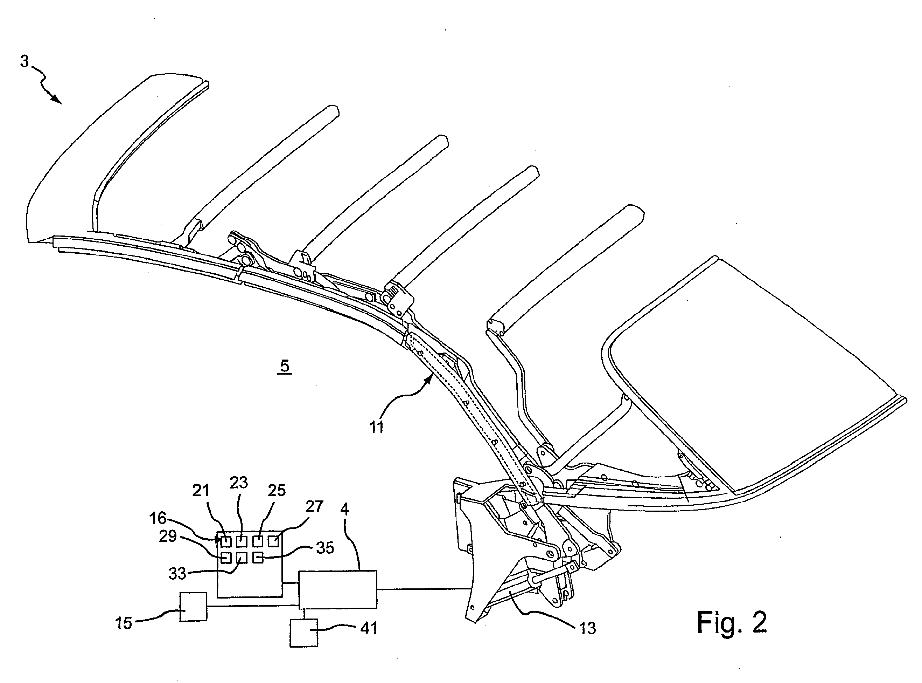

Das Verdeck 3, welches in der Fig. 2 in einer Alleinstellung dargestellt ist, umfasst einen Verdeckmechanismus 11 und kann durch eine Ansteuerung von einem Verdecksteuergerät 4 mittels eines elektro-hydraulischen Verdeckantriebs 13 zwischen der geöffneten und der geschlossenen Position bewegt werden.

Zur Auslösung einer Verdeckbewegung ist dabei ein als Schalter 15 ausgebildetes erstes Bedienelement mit dem Verdecksteuergerät 4 verbunden, wobei der Schalter 15, wie in Fig. 1 ersichtlich ist, vorliegend im Bereich einer Mittelkonsole 17 des Cabriolet-Fahrzeugs 1 angeordnet ist.

Der Schalter 15 ist dabei derart ausgebildet, dass er in zwei Richtungen bewegbar ist, wobei eine Bewegung in eine erste Richtung eine Öffnung des Verdecks 3 und eine Bewegung in eine zweite, der ersten Richtung entgegengesetzten Richtung ein Schließen des Verdecks 3 bewirkt.

Der Schalter 15 weist dabei vorliegend in jeder Bewegungsrichtung zwei Stufen auf, wobei eine erste Stufe für einen Öffnungs- bzw. Schließvorgang des Verdecks 3, bei welcher der Schalter 15 manuell während des gesamten Bewegungsvorgangs des Verdecks 3 in dieser Position gehalten werden muss, und eine zweite Stufe, welche nach Überwindung eines kleinen Widerstands durch eine Bewegung über die erste Stufe hinweg erreicht wird, für eine automatische Verdecköffnung bzw. Verdeckschließung ohne weitere Berührung des Schalters 15 vorgesehen ist.

Das Verdeck 3 kann somit nach einer einmaligen Betätigung des Schalters 15 in der zweiten Stufe aus seiner in der Fig. 2 dargestellten Schließposition automatisch in seine in der Fig. 1 gezeigten Öffnungsposition und umgekehrt verfahren werden.

Um die automatische Verdeckbewegung unterbrechen zu können, weist das Cabriolet-Fahrzeug 1 eine Not-Stopp-Einrichtung 16 auf, welche bei dem gezeigten Ausführungsbeispiel mehrere als Not-Aus-Bedienelemente ausgebildete zweiten Bedienelemente in Form von Tastern, Schaltern oder Sensoren vorsieht.

Mittels der zweiten Bedienelemente kann somit eine automatische Verdeckbewegung von einem Bediener beispielsweise aufgrund einer erkannten Gefahrensituation oder auf Wunsch unterbrochen werden, wobei die zweiten Bedienelemente bei Nichtaktivierung der automatischen Verdeckbewegung eine andere Funktionalität einnehmen.

In Fig. 1 sind mehrere geeignete Positionen zur Anordnung eines derartigen zweiten Bedienelements zur Realisierung der Not-Stopp-Funktionalität gezeigt, wobei ein zweites Bedienelement zusätzlich in den Schalter 15 derart integriert ist, dass eine Betätigung des Schalters 15 in einer der Bewegungsrichtung des Verdecks entgegengesetzten Richtung nach der Aktivierung einer automatischen Verdeckbewegung diese unterbricht.

Neben der in den Schalter 15 integrierten Not-Stopp-Funktionalität kann die Verdeckbewegung vorliegend auch durch Fensterhebertaster 21 im Fahrzeugfrontbereich, durch Fensterhebertaster 23 im Fahrzeugheckbereich, durch ein Bremspedal 25, durch einen Motorstart-Taster 27, durch einen Warnblinkschalter 29 und durch Funktionstasten im Bereich eines Lenkrades 31, wie beispielsweise eines separaten Tasters 33 oder einer Hupe 35 unterbrochen werden, wobei diese Funktionseinrichtungen 21, 23, 25, 27, 29, 33, 35 nur bei einer automatischen Verdeckbewegung der Not-Stopp-Einrichtungen 16 zugeordnet sind.

Das heißt, eine Betätigung eines zweiten Bedienelements 21, 23, 25, 27, 29, 33, 35 wird während des Verdeckautomatiklaufs von dem zugeordneten Steuergerät nicht mehr als Steuersignal für die herkömmliche Funktionalität verstanden, sondern als "Not-Stopp-Funktion" interpretiert, so dass die automatische Verdeckbewegung nach einer Betätigung eines derartigen zweiten Bedienelements 21, 23, 25, 27, 29, 33, 35 unterbrochen wird.

In einer weiteren Ausbildung der Erfindung können auch andere als die gezeigten Funktionselemente zur Realisierung der Not-Stopp-Funktionalität mit einer Mehrfachfunktionalität belegt werden, wobei z. B. bereits im Bereich des Lenkrads vorhandene Funktionstasten hierfür herangezogen werden können.

Um die zweiten Bedienelemente 21, 23, 25, 27, 29, 33, 35 der Not-Stopp-Einrichtung 16 bei einer Verdeckbewegung leichter erkennen zu können, ist es vorgesehen, dass die zweiten Bedienelemente 21, 23, 25, 27, 29, 33, 35 während der automatischen Verdeckbewegung farblich gegenüber umliegenden Elementen hervorgehoben werden, so dass die zweiten Bedienelemente 21, 23, 25, 27, 29, 33, 35 auch bei Tageslicht gut und schnell erkennbar sind. Dies ist beispielsweise durch Piktogramme realisierbar, welche bei einer automatischen Verdeckbewegung leuchten und/oder blinken und dabei beispielsweise unter einem schwarzen Decklack hervortreten. Weiterhin können die der Not-Stopp-Funktion dienenden Bedienelemente mit einer zweifarbigen LED ausgebildet sein, welche beispielsweise während einer automatischen Verdeckbewegung ihre Farbe von grün nach rot ändert, so dass diese Bedienelemente für den Bediener leicht erkennbar sind.

Das Cabriolet-Fahrzeug 1 ist weiterhin mit einer Detektionseinrichtung 41 ausgebildet, mittels welcher festgestellt werden kann, ob ein Fahrzeugsitz 43, 44 von einem Bediener belegt ist. Durch eine Anbindung der Detektionseinrichtung 41 an das Verdecksteuergerät 4 oder durch eine CAN-Botschaft von einem anderen Steuergerät kann vorgegeben werden, dass eine Verdeckbewegung nur auslösbar ist, wenn die Detektionseinrichtung 41 eine Belegung des Fahrersitzes oder eines anderen für eine Bedienperson definierten Fahrzeugsitzes detektiert hat und somit sichergestellt ist, dass ein Bediener auf dem Fahrersitz 43 bzw. gegebenenfalls auf einem Beifahrersitz 44 sitzt.

Zur Detektion einer Fahrersitzbelegung ist vorliegend ein Fahrersitzbelegungssensor 45 im Fahrersitz 43 vorgesehen, welcher hierzu mit einer optischen Überwachung in einem nicht näher dargestellten Fahrzeug-Rückspiegel, einer Abfrage einer Fahrertür 47, einer Abfrage eines Zustandes eines Gurtschlosses 49 und einer Abfrage einer Fahrzeuggeschwindigkeit zusammenwirkt. Zur Fahrersitzbelegung wird weiterhin eine Positionsüberwachung einer bei dem vorliegend als Linkslenker ausgebildeten Cabriolet-Fahrzeug 1 linken Hand des Bedieners auf einer festgelegten Position an dem Lenkrad 31 herangezogen.

Zudem kann eine unter dem Handelsnamen "Skinplex" bekannte und in der DE 102 06 128 A1 beschriebene Technologie eingesetzt, mittels welcher festgestellt werden kann, auf welchem Fahrzeugsitz 43, 44 der Bediener des Schalters 15 bzw. der zweiten Bedienelemente 21, 23, 25, 27, 29, 33, 35 und 39 sitzt, wobei die Aktivierung der jeweiligen Funktionalität über eine Kopplung an das Verdecksteuergerät 4 entweder freigegeben oder unterbunden werden kann.

Zur Sicherstellung, dass ein Bediener sich in der Reichweite eines zweiten Bedienelements 21, 23, 25, 27, 29, 33, 35 zum Stoppen der automatischen Verdeckbewegung befindet, ist es weiterhin vorgesehen, dass eine automatische Verdeckbewegung unterbrochen wird, wenn die mit dem Verdecksteuergerät 4 verbundene Detektionseinrichtung 41 erkennt, dass ein sich auf dem Fahrersitz 43 befindlicher Bediener aus dem Cabriolet-Fahrzeug 1 aussteigt.

Das vorliegende Cabriolet-Fahrzeug 1 weist eine Signaleinrichtung 51 auf, welche mit akustischen Signalgebern und optischen Signalgebern ausgebildet ist. Kurz vor und während einer automatischen Verdeckbewegung geben als Lautsprecher 53, 55 ausgebildete akustische Signalgeber mehrmals eine Stimmausgabe, beispielsweise in der Form "Achtung", "Vorsicht Dachbewegung", "Vorsicht Einklemmgefahr" oder ähnliches wieder, wobei zusätzlich im Bereich eines Armaturenbretts 54 ein Lautsprecher 56 angeordnet ist, welcher eine Botschaft ausgeben und/oder als Summer fungieren kann.

Als optische Signalgeber sind neben der bereits genannten farblichen Hervorhebung der zweiten Bedienelemente 21, 23, 25, 27, 29, 33, 35 weiterhin eine während einer Verdeckbewegung blinkende Innenleuchte 59, ein leuchtendes Display 61, ein Head-Up-Display 63 und in Signalfarbe lackierte, als Verdeckgestänge 57 ausgebildete Verdeckteile vorgesehen.

Nachdem eine Verdeckbewegung unterbrochen worden ist, sei es infolge eines Drückens eines entsprechenden zweiten Bedienelements 21, 23, 25, 27, 29, 33, 35 durch einen Bediener oder infolge eines automatischen Stopps, beispielsweise wenn die Detektionseinrichtung 41 erkannt hat, dass der Bediener den Fahrersitz 43 verlassen hat oder eine nicht dargestellte Einklemmschutzsensorik eine Einklemmsituation erkannt hat, wird der Schalter 15 in seine Startbedingung versetzt, so dass eine Verdeckbewegung durch Betätigen des Schalters 15 in der gewünschten Bewegungsrichtung fortgesetzt werden und somit das Verdeck 3 fertig geschlossen oder geöffnet werden kann.

Statt bei einer Betätigung der zweiten Bedienelemente den automatischen Verdecklauf zu stoppen, kann es auch vorgesehen sein, dass durch die Betätigung des entsprechenden zweiten Bedienelements ein Reversieren des Verdecks ausgelöst wird. Diese Reversierfunktion kann zudem abhängig von der Verdeckposition sein, wobei in dem Verdecksteuergerät 4 beispielsweise festgelegt sein kann, ob und wie weit bei der jeweiligen Position des Verdecks 3 die Verdeckbewegung reversiert wird.

## Patentansprüche

1. Cabriolet-Fahrzeug mit einem Verdeck (3), welches zwischen einer einen Fahrgastraum (5) freigebenden Position und einer den Fahrgastraum (5) schließenden Position verfahrbar ist, wobei
eine Verdeckbewegung nach einer Betätigung eines ersten Bedienelements (15) durch einen Bediener automatisiert ausführbar ist, **dadurch gekennzeichnet, dass** die Verdeckbewegung mittels wenigstens eines wenigstens während der automatischen Verdeckbewegung einer Not-Stopp-Einrichtung (16) des Verdecks (3) zugeordneten zweiten Bedienelements (21, 23, 25, 27, 29, 33, 35) von dem Bediener deaktivierbar ist, wobei das wenigstens eine zweite Bedienelement (21, 23, 25, 27, 29, 33, 35) nur während einer Aktivierung der automatischen Verdeckbewegung der Not-Stopp-Einrichtung (16) zugeordnet ist und ohne Aktivierung der automatischen Verdeckbewegung einer weiteren Funktionseinrichtung (21, 23, 25, 27, 29, 33, 35) zugeordnet ist.

2. Cabriolet-Fahrzeug nach Anspruch 1,
**dadurch gekennzeichnet,**
**dass** das wenigstens eine zweite Bedienelement (33, 35) an einem Lenkrad (31) separat oder in Verbindung mit einem einer weiteren Funktionseinrichtung zugeordneten Bedienelement angeordnet ist.

3. Cabriolet-Fahrzeug nach einem der Ansprüche 1 oder 2,
**dadurch gekennzeichnet,**
**dass** das zweite Bedienelement in das erste Bedienelement (15) integriert ist.

4. Cabriolet-Fahrzeug nach einem der Ansprüche 1 oder 2,
**dadurch gekennzeichnet,**
**dass** das zweite Bedienelement (21, 23, 25, 27, 29, 33, 35) separat von dem ersten Bedienelement (15) vorgesehen ist.

5. Cabriolet-Fahrzeug nach einem der Ansprüche 1 bis 4,
**dadurch gekennzeichnet,**
**dass** das zweite Bedienelement (21, 23, 25, 27, 29, 33, 35) als Taster, Schalter oder Sensor ausgebildet ist.

6. Cabriolet-Fahrzeug nach einem der Ansprüche 1 bis 4,
**dadurch gekennzeichnet,**
**dass** das zweite Bedienelement mittels einer Sprachbedienung aktivierbar ist.

7. Cabriolet-Fahrzeug nach einem der Ansprüche 1 bis 6,
**dadurch gekennzeichnet,**
**dass** ein Fensterhebertaster (21, 23) und/oder ein Bremspedal (25) und/oder ein Warnblinkerschalter (29) und/oder eine Hupe (35) und/oder ein Motorstart-Taster (27) ein Bedienelement einer weiteren Funktionseinrichtung darstellt, welches zugleich das der Not-Stopp-Einrichtung (16) zugeordnete zweite Bedienelement bildet.

8. Cabriolet-Fahrzeug nach einem der Ansprüche 1 bis 7,
**dadurch gekennzeichnet,**
**dass** das erste Bedienelement (15) in dem Cabriolet-Fahrzeug (1), insbesondere an einer Mittelkonsole (17), und/oder an einer Fernbedienung angeordnet ist.

9. Cabriolet-Fahrzeug nach einem der Ansprüche 1 bis 8,
**dadurch gekennzeichnet,**
**dass** das zweite Bedienelement (21, 23, 25, 27, 29, 33, 35) insbesondere bei einer automatischen Verdeckbewegung farblich gegenüber umliegenden Elementen hervorgehoben ausgebildet ist.

10. Cabriolet-Fahrzeug nach einem der Ansprüche 1 bis 9,
**dadurch gekennzeichnet,**
**dass** das zweite Bedienelement (21, 23, 25, 27, 29, 33, 35) zur Ausgabe optischer und/oder akustischer Signale, insbesondere bei einer Verdeckbewegung und/oder einer von einer Detektionseinrichtung erkannten Einklemmsituation, ausgebildet ist.

11. Cabriolet-Fahrzeug nach einem der Ansprüche 1 bis 10,
**dadurch gekennzeichnet,**
**dass** eine automatisierte Verdeckbewegung nach einem Not-Stopp durch eine erste Betätigung des zweiten Bedienelementes (21, 23, 25, 27, 29, 33, 35), einem automatischen Stopp nach Erkennen einer Einklemmsituation durch eine Detektionseinrichtung oder nach Ausgabe eines Warnsignals durch Betätigung des zweiten Bedienelementes weiter aktivierbar ist.

12. Cabriolet-Fahrzeug nach einem der Ansprüche 1 bis 11,
**dadurch gekennzeichnet,**
**dass** eine Verdeckbewegung nur bei Detektion einer Fahrzeugsitzbelegung, insbesondere einer Fahrersitzbelegung, ausgeführt wird.

13. Cabriolet-Fahrzeug nach Anspruch 12,
**dadurch gekennzeichnet,**
**dass** eine Fahrzeugsitzbelegung durch eine Abfrage eines Fahrersitzbelegungssensors (45) im Fahrzeugsitz (43) und/oder einer optischen Überwachung und/oder einen Zustand eines Gurtschlosses (49) und/oder einer Fahrzeugtür (47) und/oder eine Fahrzeuggeschwindigkeit ermittelbar ist.

14. Cabriolet-Fahrzeug nach Anspruch 13,
**dadurch gekennzeichnet,**
**dass** eine Fahrzeugsitzbelegung durch eine Überwachung einer vorzugsweise linken Hand des Bedieners auf einer festgelegten Position an dem Lenkrad (31) ermittelbar ist.

15. Cabriolet-Fahrzeug nach einem der Ansprüche 1 bis 14,
**dadurch gekennzeichnet,**
**dass** bei einer Auslösung einer automatischen Verdeckbewegung durch das erste Bedienelement (15) insbesondere feststellbar ist, auf welchem Fahrzeugsitz (43) sich ein Bediener befindet, wobei die Auslösung der Verdeckbewegung abhängig von der Position des Bedieners freischaltbar ist.

16. Cabriolet-Fahrzeug nach einem der Ansprüche 1 bis 15,
**dadurch gekennzeichnet,**
**dass** zur Ausgabe eines Warnsignals vor und/oder während einer automatischen Verdeckbewegung eine Signaleinrichtung (51) mit wenigstens einem Signalgeber (53, 55, 56, 57, 59, 61, 63) vorgesehen ist, wobei der wenigstens eine Signalgeber als haptischer Signalgeber, akustischer Signalgeber (53, 55, 56) oder optischer Signalgeber (57, 59, 61, 63) ausgebildet ist.

17. Cabriolet-Fahrzeug nach Anspruch 16,
**dadurch gekennzeichnet,**
**dass** mittels des akustischen Signalgebers (53, 55, 56) eine Stimmausgabe wiedergebbar ist.

18. Cabriolet-Fahrzeug nach Anspruch 16,
**dadurch gekennzeichnet,**
**dass** der optische Signalgeber (57, 59, 61, 63) als Cabriolet-Innenbeleuchtung und/oder Cabriolet-Außenbeleuchtung und/oder als Beleuchtung von Bedienelementen und/oder als Lackierung von Verdeckteilen insbesondere in Signalfarben ausgebildet ist.

## Claims

1. A convertible vehicle comprising a hood (3) which is displaceable between a position exposing a passenger compartment (5) and a position closing the passenger compartment (5), wherein a hood movement can be performed automatically after actuation of a first control element (15) by an operator, **characterised in that** said hood movement can be deactivated by the operator by means of at least one second control element (21, 23, 25, 27, 29, 33, 35) assigned to an emergency stop device (16) of the hood (3) at least during said automatic hood movement, said at least one second control element (21, 23, 25, 27, 29, 33, 35) being assigned to the emergency stop device (16) only during activation of the automatic hood movement and being assigned to another functional device (21, 23, 25, 27, 29, 33, 35) when the automatic hood movement is not activated.

2. The convertible vehicle according to claim 1, **characterised in that** said at least one second control element (33, 35) is arranged on a steering wheel (31) either separately or in combination with an control element assigned to another functional device.

3. The convertible vehicle according to any one of claims 1 or 2, **characterised in that** the second control element is integrated in the first control element (15).

4. The convertible vehicle according to any one of claims 1 or 2, **characterised in that** the second control element (21, 23, 25, 27, 29, 33, 35) is provided separately from the first control element (15).

5. The convertible vehicle according to any one of claims 1 to 4, **characterised in that** the second control element (21, 23, 25, 27, 29, 33, 35) is provided as a button, switch or sensor.

6. The convertible vehicle according to any one of claims 1 to 4, **characterised in that** the second control element can be activated by voice control.

7. The convertible vehicle according to any one of claims 1 to 6, **characterised in that** a power window button (21, 23) and/or a brake pedal (25) and/or a hazard warning light switch (29) and/or a horn (35) and/or an engine start button (27) constitutes a control element of another functional device, which at the same time constitutes the second control element assigned to the emergency stop device (16).

8. The convertible vehicle according to any one of claims 1 to 7, **characterised in that** the first control element (15) is arranged in the convertible vehicle (1), in particular on a centre console (17), and/or on a remote control unit.

9. The convertible vehicle according to any one of claims 1 to 8, **characterised in that** the second control element (21, 23, 25, 27, 29, 33, 35) is highlighted, in particular during an automatic hood movement, in a different colour than its surrounding elements.

10. The convertible vehicle according to any one of claims 1 to 9, **characterised in that** the second control element (21, 23, 25, 27, 29, 33, 35) is designed to emit optical and/or acoustic signals, in particular during a hood movement and/or in an obstruction situation detected by a detecting device.

11. The convertible vehicle according to any one of claims 1 to 10, **characterised in that** an automatic hood movement after an emergency stop by a first actuation of the second control element (21, 23, 25, 27, 29, 33, 35), an automatic stop after detection of an obstruction situation by a detecting device, or after emission of a warning signal can be further activated by actuating the second control element.

12. The convertible vehicle according to any one of claims 1 to 11, **characterised in that** a hood movement is performed only when occupancy of a vehicle seat, in particular the driver's seat, is detected.

13. The convertible vehicle according to claim 12, **characterised in that** vehicle seat occupancy can be determined by interrogating a vehicle seat occupancy sensor (45) in the vehicle seat (43) and/or by optical monitoring and/or by a condition of a belt buckle (49) and/or of a vehicle door (47) and/or a vehicle speed.

14. The convertible vehicle according to claim 13, **characterised in that** vehicle seat occupancy can be determined by monitoring a hand, preferably the left one, of the operator in a defined position on the steering wheel (31).

15. The convertible vehicle according to any one of claims 1 to 14, **characterised in that**, when triggering an automatic hood movement by the first control element (15), it is possible to determine, in particular, which vehicle seat (43) an operator occupies, and said triggering of the hood movement can be enabled as a function of the operator's position.

16. The convertible vehicle according to any one of claims 1 to 15, **characterised in that** for emitting a warning signal before and/or during an automatic hood movement, a signalling device (51) is provided with at least one signal transmitter (53, 55, 56, 57, 59, 61, 63), said at least one signal transmitter being provided as an tactile signal transmitter, an acoustic signal transmitter (53, 55, 56) or an optical signal transmitter (57, 59, 61, 63).

17. The convertible vehicle according to claim 16, **characterised in that** a voice output can be reproduced by the acoustic signal transmitter (53, 55, 56).

18. The convertible vehicle according to claim 16, **characterised in that** the optical signal transmitter (57, 59, 61, 63) is provided as convertible vehicle interior lighting and/or convertible vehicle exterior lighting and/or as lighting of control elements and/or as a paint coat on hood parts, in particular in signal colours.

## Revendications

1. Véhicule cabriolet, comprenant une capote (3) qui est déplaçable entre une position exposant un habitacle (5) et une position fermant ledit habitacle (5), un mouvement de la capote pouvant être effectué automatiquement après actionnement d'un premier élément de commande (15) par un opérateur,
**caractérisé en ce que** ledit mouvement de la capote peut être désactivé par l'opérateur au moyen d'au moins un deuxième élément de commande (21, 23, 25, 27, 29, 33, 35) associé avec un dispositif d'arrêt d'urgence (16) de la capote (3) au moins pendant ledit mouvement automatique de la capote, ledit au moins un deuxième élément de commande (21, 23, 25, 27, 29, 33, 35) n'étant associé avec le dispositif d'arrêt d'urgence (16) que pendant une activation du mouvement automatique de la capote et étant associé à un autre dispositif fonctionnel (21, 23, 25, 27, 29, 33, 35) sans activation du mouvement automatique de la capote.

2. Véhicule cabriolet selon la revendication 1, **caractérisé en ce que** ledit au moins un deuxième élément de commande (33, 35) est disposé sur un volant (31), soit séparément ou en combinaison avec un élément de commande associé avec un autre dispositif fonctionnel.

3. Véhicule cabriolet selon l'une quelconque des revendications 1 ou 2, **caractérisé en ce que** le deuxième élément de commande est intégré dans le premier élément de commande (15).

4. Véhicule cabriolet selon l'une quelconque des revendications 1 ou 2, **caractérisé en ce que** le deuxième élément de commande (21, 23, 25, 27, 29, 33, 35) est séparé du premier élément de commande (15).

5. Véhicule cabriolet selon l'une quelconque des revendications 1 à 4, **caractérisé en ce que** le deuxième élément de commande (21, 23, 25, 27, 29, 33, 35) est réalisé sous forme d'un bouton-poussoir, d'un commutateur ou d'un capteur.

6. Véhicule cabriolet selon l'une quelconque des revendications 1 à 4, **caractérisé en ce que** le deuxième élément de commande est activable par commande vocale.

7. Véhicule cabriolet selon l'une quelconque des revendications 1 à 6, **caractérisé en ce qu'**une touche lève-vitre (21, 23) et/ou une pédale de frein (25) et/ou un commutateur clignotants de détresse (29) et/ou un klaxon (35) et/ou un bouton-démarrage moteur (27) constitue un élément de commande d'un autre dispositif fonctionnel qui constitue en même temps le deuxième élément de commande associé avec le dispositif d'arrêt d'urgence (16).

8. Véhicule cabriolet selon l'une quelconque des revendications 1 à 7, **caractérisé en ce que** le premier élément de commande (15) est disposé dans le véhicule cabriolet (1), notamment sur une console centrale (17), et/ou sur une télécommande.

9. Véhicule cabriolet selon l'une quelconque des revendications 1 à 8, **caractérisé en ce que** le deuxième élément de commande (21, 23, 25, 27, 29, 33, 35) est mis en relief, notamment lors d'un mouvement automatique de la capote, par une couleur qui se distingue de celle des éléments entourant celui-ci.

10. Véhicule cabriolet selon l'une quelconque des revendications 1 à 9, **caractérisé en ce que** le deuxième élément de commande (21, 23, 25, 27, 29, 33, 35) est destiné à émettre des signaux optiques et/ou acoustiques, notamment lors d'un mouvement de la capote et/ou dans une situation de coincement détectée par un dispositif de détection.

11. Véhicule cabriolet selon l'une quelconque des revendications 1 à 10, **caractérisé en ce qu'**un mouvement automatique de la capote est activable encore par actionnement du deuxième élément de commande, après un arrêt d'urgence par un actionnement initial du deuxième élément de commande (21, 23, 25, 27, 29, 33, 35), un arrêt automatique après détection d'une situation de coincement par un dispositif de détection, ou après émission d'un signal d'avertissement.

12. Véhicule cabriolet selon l'une quelconque des revendications 1 à 11, **caractérisé en ce qu'**un mouvement de la capote n'est réalisé que lors de la détection de l'occupation d'un siège de véhicule, notamment du siège du conducteur.

13. Véhicule cabriolet selon la revendication 12, **caractérisé en ce que** l'occupation d'un siège de véhicule peut être déterminée par interrogation d'un capteur d'occupation de siège de véhicule (45) installé dans le siège de véhicule (43) et/ou par surveillance optique et/ou par une condition d'une serrure de ceinture (49) et/ou d'une porte du véhicule (47) et/ou une vitesse dudit véhicule.

14. Véhicule cabriolet selon la revendication 13, **caractérisé en ce que** l'occupation d'un siège de véhicule peut être déterminée par surveillance d'une main, de préférence la main gauche, d'un opérateur dans une position définie sur le volant (31).

15. Véhicule cabriolet selon l'une quelconque des revendications 1 à 14, **caractérisé en ce qu'**il est possible, lors d'un déclenchement d'un mouvement automatique de la capote par le premier élément de commande (15), de déterminer notamment sur quel siège de véhicule (43) se trouve un opérateur, le déclenchement du mouvement de la capote pouvant être libéré en fonction de la position de l'opérateur.

16. Véhicule cabriolet selon l'une quelconque des revendications 1 à 15, **caractérisé en ce que**, pour émettre un signal d'avertissement avant et/ou pendant un mouvement automatique de la capote, on prévoit un dispositif de signalisation (51) avec au moins un émetteur de signaux (53, 55, 56, 57, 59, 61, 63), ledit au moins un émetteur de signaux étant réalisé en tant qu'émetteur de signaux tactiles, émetteur de signaux acoustiques (53, 55, 56) ou émetteur de signaux optiques (57, 59, 61, 63).

17. Véhicule cabriolet selon la revendication 16, **caractérisé en ce qu'**une synthèse vocale peut être reproduite par l'émetteur de signaux acoustiques (53, 55, 56).

18. Véhicule cabriolet selon la revendication 16, **caractérisé en ce que** l'émetteur de signaux optiques (57, 59, 61, 63) est réalisé en tant qu'éclairage intérieure du véhicule cabriolet et/ou éclairage extérieure du véhicule cabriolet et/ou en tant qu'éclairage d'éléments de commande et/ou en tant que peinture de parties de la capote, notamment en couleurs voyantes.
